(19) **Europäisches Patentamt**
**European Patent Office**
**Office européen des brevets**

(11) **EP 2 566 264 A1**

(12) **EUROPEAN PATENT APPLICATION**
published in accordance with Art. 153(4) EPC

(43) Date of publication:
06.03.2013 Bulletin 2013/10

(51) Int Cl.:
*H04W 72/04* (2009.01)

(21) Application number: **10850485.3**

(86) International application number:
**PCT/CN2010/072320**

(22) Date of filing: **29.04.2010**

(87) International publication number:
**WO 2011/134152 (03.11.2011 Gazette 2011/44)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(71) Applicant: **Fujitsu Limited**
**Kawasaki-shi, Kanagawa 211-8588 (JP)**

(72) Inventors:
• **WANG, Jian**
**Beijing 100025 (CN)**

• **ZHOU, Hua**
**Beijing 100025 (CN)**
• **WU, Jianming**
**Beijing 100025 (CN)**
• **WANG, Yi**
**Beijing 100025 (CN)**

(74) Representative: **Holz, Ulrike**
**Haseltine Lake LLP**
**Lincoln House, 5th Floor**
**300 High Holborn**
**London WC1V 7JH (GB)**

(54) **METHOD FOR TRANSMITTING SOUNDING REFERENCE SIGNALS AND PARAMETERS THEREOF, BASE STATION AND MOBILE STATION**

(57) A method for transmitting sounding reference signals (SRSs) and parameters thereof, a base station and a mobile station are provided by the present invention. The method for transmitting sounding reference signals includes: according to SRS parameters for one antenna received from a base station, allocating SRS resources for one antenna in a mobile station; according to the received SRS parameters and based on the predetermined relationships between SRS parameters of each antenna in the mobile station, determining SRS parameters of other antennas in the mobile station; according to the determined SRS parameters of the other antennas, allocating SRS resources for the other antennas; and transmitting corresponding SRS signals on the allocated SRS resources via the one antenna and the other antennas respectively. The method and apparatus can save signaling resources in a wireless communication system.

Fig. 4

**Description**

**Field of the Invention**

The present invention generally relates to the field of wireless communication systems and more particularly to a method of transmitting a Sounding Reference Signal (SRS), a method of transmitting an SRS parameter, a base station and a mobile station.

**Background of the Invention**

In the fourth-generation (4G) mobile communication system, data demodulation and channel sounding is performed with a Reference Signal (RS), for example, in the uplink of Long Term Evolution (LTE) Single Carrier-Frequency Division Multiplex Address (SC-FDMA).

Functions of an uplink RS include channel estimation required for coherent demodulation, channel quality sounding for uplink scheduling, power control, timing estimation, direction-of-arrival estimation to support downlink beam shaping, etc.

The majority of uplink reference signals in the LTE are based on a Zadoff-Chu (ZC) sequence which is also referred to as a Generalized Chirp-Like (GCL) sequence. This sequence is typically a non-binary unit amplitude sequence with the characteristic of Constant Amplitude Zero Autocorrelation (CAZAC). The CAZAC sequence is a complex-valued signal in the form of $e^{j\alpha_k}$. A ZC sequence with the length of a prime number $N_{ZC}$ can be represented as:

$$a_q = \exp\left[-j2\pi q\, \frac{n(n+1)/2+ln}{N_{ZC}}\right]$$

Where $q \in \{1,\cdots,N_{ZC}-1\}$ is a root index of the ZC sequence, $n=0,1,\cdots,N_{ZC}-1$, and $l \in N$. For simplicity, $l$ is set to 0 in the LTE.

The ZC sequence has the following characteristics:

1. The ZC sequence has constant amplitude, and still has constant amplitude after being subjected to a DFT operation. The characteristic of constant amplitude restricts a peak to average power ratio and boundary and temporally flat interference with other users. Furthermore, this characteristic also simplifies an implementation when it is only necessary to calculate and store a phase rather than amplitude.

2. The ZC sequence with any length has ideal cyclic autocorrelation, that is, cyclic shift correlation is a $\delta$ function.

An uplink RS has good characteristics due to the ideal characteristic of the ZC sequence: (1) constant amplitude in the frequency domain for uniform excitation of respective allocated sub-carriers in unbiased channel estimation; (2) a low Cubic Metric (CM) value in the time domain; (3) excellent autocorrelation characteristic facilitating precise channel estimation; (4) good cross-correlation characteristic for reduced interference of an RS transmitted from other cells on the same resource.

Two types of RSs are supported by the uplink: (1) a Demodulation RS (DM-RS) generally used for channel estimation of uplink data transmission or signaling information transmission and further relevant detection; (2) a Sounding RS (SRS) generally used for channel quality measurement and further frequency selective scheduling of the uplink.

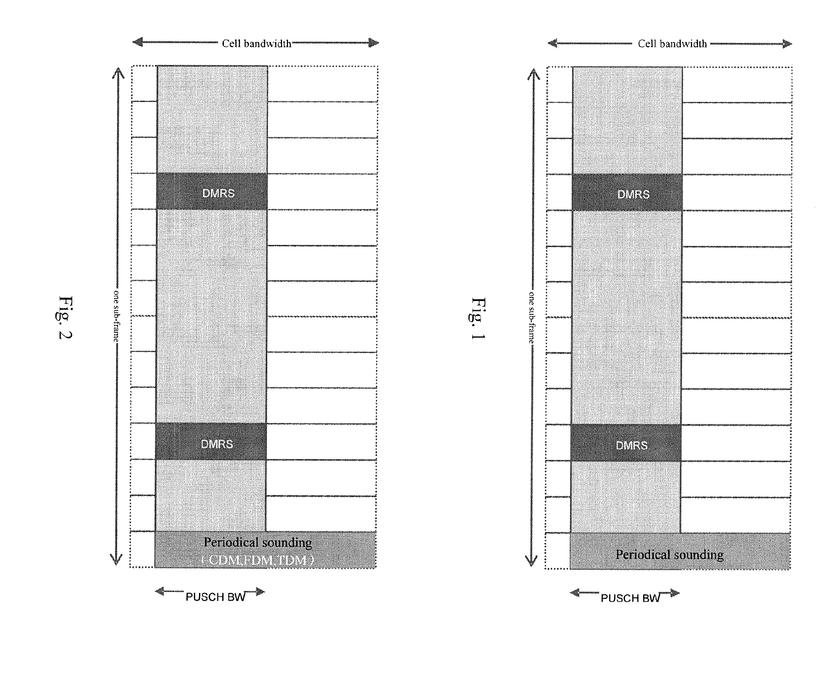

In an LTE system, a sub-frame includes 14 symbols numbered 0, 1, 2, ..., 13 respectively, as illustrated in Fig.1. In a Rel.8/9 system, an SRS signal of a user can be transmitted only in the No.13 symbol. In the Rel.8/9 system, a DMRS signal of a user can be transmitted only in the No.3 symbol and the No. 10 symbol. A DMRS and an SRS of the uplink are time division-multiplexed with a data symbol. A DMRS of a mobile station of a given user has the same bandwidth as an uplink data channel (PUSCH) or an uplink signaling channel (PUCCH) transmitted from the user, e.g., a PUSCH bandwidth among the entire cell bandwidth. Therefore, DMRSs of different users are also orthogonal to each other when different bandwidths of the system are allocated to the respective users (FDMA).

An SRS bandwidth of a user can be different from a bandwidth for data transmission. An SRS signal of a user is usually transmitted on the last SC-FDMA symbol of a sub-frame, and a mobile terminal are notified of parameters of the SRS signal by upper-layer signaling of the system. In Fig.1, a mobile station transmits an SRS periodically on the last symbol of a sub-frame. In Fig.2, SRS signals of mobile stations of respective users are multiplexed through Frequency Division Multiplexing (FDM), Code Division Multiplexing (CDM) or Time Division Multiplexing (TDM). In the TDM mode, an eNodeB (base station) in the LTE requires transmission of a single SRS from a mobile station or configures the mobile station to transmit an SRS periodically to the end. If a mobile station transmits an SRS periodically, then this period can be 2, 5, 10, 20, 40, 80, 160 or 320ms. In the FDM mode, the eNodeB can assign frequency resources with different bandwidths or frequency resources with the same bandwidth but at different locations to mobile stations of users for transmission of an SRS signal. Factors influencing an SRS bandwidth include the maximum power of a mobile station, the number of sounding-enabled mobile stations and a sounding bandwidth required for benefiting from uplink scheduling dependent upon a channel condition. In order to further multiplex a frequency resource, a carrier of the same frequency band can further be divided into different sub-carriers which are spaced from each other in the frequency domain by a Transmission Comb (TC) value. In the CDM mode, the eNodeB can also assign frequency resources with the same bandwidth at the same location to different users. At this time, different cyclic shifts (CS) of an RS sequence can make the sequences orthogonal, that is, the correlation between a ZC sequence and any cyclic shift of the same sequence is zero. Different mobile stations are provided with different CS values. With a channel impulse response of a limited length, different transmitters can use different cyclic temporal shifts of the same RS base sequence, and orthogonality can remain between the RSs as long as the cyclic shifts are longer than the channel impulse response.

No other measure than the foregoing TDM, FDM and CDM can be taken in the existing LTE system to multiplex an SRS resource.

In the LTE system, transmission of an uplink signal of a user supports a single-antenna transmission or antenna-selective transmission mode. SRS resources can be assigned simply by assigning only a set of SRS resources for each user.

In an LTE-Advanced system, in order to satisfy a higher uplink transmission rate index, a mobile station is required to support transmission at a higher rank in the uplink, e.g., transmission at the rank 1 to rank 4, and thus the mobile station is required to be equipped with a higher number of antennas, e.g., 2 antennas to support transmission at the highest rank of 2 or 4 antennas to support transmission at the highest rank of 4.

When the mobile station is equipped with a higher number of antennas for transmission at a higher rank, also a larger number of SRS resources have to be assigned thereto for sounding and estimation of a channel of each antenna.

After a base station assigns sounding resources to be used for respective mobile stations and respective antennas of the respective mobile stations, it is necessary to notify the respective mobile stations of corresponding SRS parameters by signaling so that the mobile stations allocate SRS resources really for the antennas according to the SRS parameters.

In an obvious method, the base station notifies respective users of sounding signal resources of respective antennas respectively by explicit signaling. However, this method may result in an excessive signaling load of the system. For example, if the mobile station is provided with two transmission antennas, then two-fold signaling resources are required to notify sounding signal resource configurations of the respective transmission antennas; and in another example, if the mobile station is provided with four transmission antennas, then four-fold signaling resources are required to notify sounding signal resource configurations of the respective transmission antennas.

## Summary of the Invention

The summary of the invention will be given below to provide basic understanding of some aspects of the invention. It shall be appreciated that this summary is neither exhaustively description of the invention nor intended to define essential or important parts or the scope of the invention, but is merely for the purpose of presenting some concepts in a simplified form and hereby acts as a preamble of more detailed descriptions which will be presented later.

The invention is intended to address at least the foregoing technical problem in the prior art so as to save signaling resources of a wireless communication system.

To this end, there is provided according to an aspect of the invention a method for Sounding Reference Signal (SRS) transmission, which includes: allocating SRS resources to one antenna of a mobile station according to an SRS parameter for one antenna received from a base station; determining SRS parameters for other antennas of the mobile station according to the received SRS parameter and based on a predetermined relationship between the SRS parameter of each antenna of the mobile station; allocating SRS resources to the other antennas according to the determined SRS parameters for the other antennas; and transmitting respective SRS signals on the allocated SRS resources respectively via the one and the other antennas.

According to another aspect of the invention, there is provided a method for Sounding Reference Signal (SRS) parameter transmission, which includes: transmitting to a mobile station a predetermined relationship between the SRS parameter of each antenna of the mobile station; determining an SRS parameter for one antenna of the mobile station based on the predetermined relationship; and transmitting to the mobile station the SRS parameter for one antenna of the mobile station.

According to another aspect of the invention, there is provided a mobile station including: a receiving unit, for receiving a Sounding Reference Signal (SRS) parameter for one antenna from a base station; an SRS resource allocation unit, for allocating SRS resources to one antenna of the mobile station according to the SRS parameter received by the received unit; determining SRS parameters for other antennas of the mobile station according to the received SRS parameter and based on a predetermined relationship between the SRS parameter of each antenna of the mobile station;

and allocating SRS resources to the other antennas of the mobile station according to the determined SRS parameters for the other antennas; and a transmitting unit, for transmitting respective SRS signals on the allocated SRS resources respectively via the one and the other antennas.

According to another aspect of the invention, there is provided a base station including: a Sounding Reference Signal (SRS) parameter determining unit, for determining an SRS parameter for one antenna of a mobile station based on a predetermined relationship between the SRS parameter of each antenna of the mobile station; and a transmitting unit, for transmitting the predetermined relationship to the mobile station and transmitting the SRS parameter for one antenna to the mobile station.

These and other advantages of the invention will become more apparent from the following detailed description of preferred embodiments of the invention with reference to the drawings.

## Brief Description of the Drawings

The foregoing and other objects, features and advantages of the invention will become more apparent from the foregoing description of embodiments of the invention with reference to the drawings in which components serve only to illustrate the principle of the invention and in which identical or like technical features or components will be denoted with identical or similar reference numerals.

Fig.1 illustrates a schematic diagram of a sub-frame for transmitting an SRS in the prior art;

Fig.2 illustrates a schematic diagram of another sub-frame for transmitting an SRS in the prior art;

Fig.3 illustrates a block diagram of a mobile station according to an embodiment of the invention;

Fig.4 illustrates a flow chart of a method of transmitting an SRS according to an embodiment of the invention;

Fig.5 illustrates a block diagram of a base station according to an embodiment of the invention;

Fig.6 illustrates a flow chart of a method of transmitting SRS parameters according to an embodiment of the invention; and

Fig.7 illustrates a block diagram of a wireless communication system according to an embodiment of the invention.

## Detailed Description of the Invention

Embodiments of the invention will be described below with reference to the drawings. An element and a feature described in one drawing or one embodiment of the invention can be combined with an element and a feature illustrated in one or more other drawings or embodiments. It shall be noted a representation and a description of components and processes irrelevant to the invention and known to those ordinarily skilled in the art have been omitted in the drawings and the description for the sake of clarity.

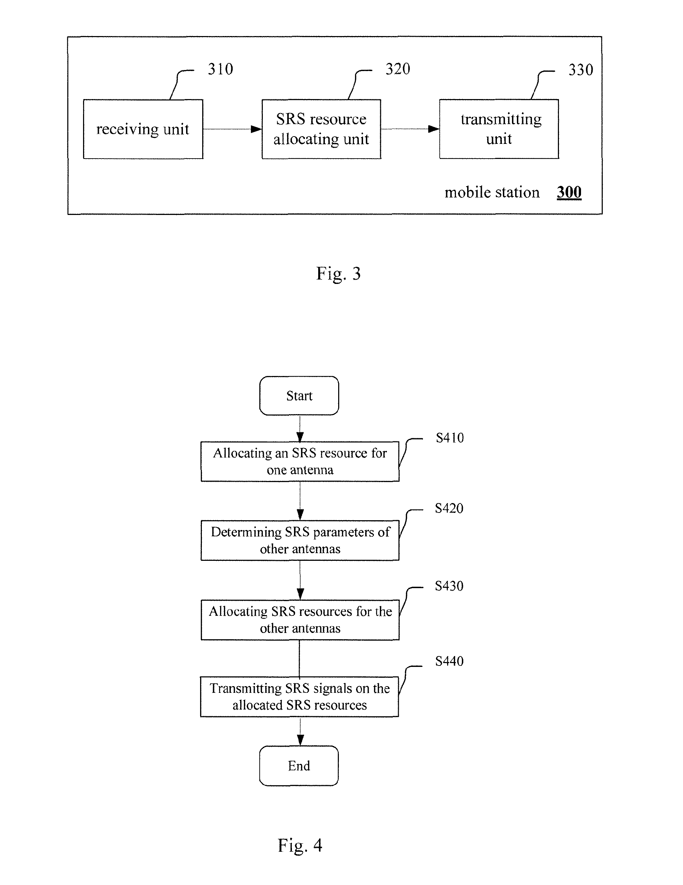

Fig.3 illustrates a block diagram of a mobile station according to an embodiment of the invention. The mobile station 300 includes: a receiving unit 310 configured to receive an SRS parameter transmitted from a base station; an SRS resource allocating unit 320 configured to allocate an SRS resource for each antenna in the mobile station 300 according to the SRS parameter received by the receiving unit 310; and a transmitting unit 330 configured to transmit corresponding SRS signals on the SRS resources allocated for the respective antennas via the respective antennas.

An operation principle of the mobile station 300 will be described below in details with reference to Fig.4.

In the invention, the mobile station receives only an SRS parameter for one antenna from the base station and can derive SRS parameters of other antennas by using a predetermined relationship between the SRS parameters of the respective antennas in order to save signaling resources of a system.

Fig.4 illustrates a flow chart of a method of transmitting an SRS according to an embodiment of the invention. In the step S410, the SRS resource allocating unit 320 allocates an SRS resource for one antenna in the mobile station 300 according to an SRS parameter for one antenna received by the receiving unit 310 from the base station.

In the step S420, the SRS resource allocating unit 420 determines SRS parameters of other antennas in the mobile station 300 based upon a predetermined relationship between the SRS parameters of the respective antennas in the mobile station 300.

In order to multiplex an SRS resource by using the foregoing various multiplexing mechanisms, SRS parameters that the base station typically transmits to the mobile station may include: a frequency location, a TC value, a CS value, a frequency modulation pattern, etc., for transmitting an SRS. The mobile station can allocate a corresponding SRS resource for transmitting an SRS signal really for an antenna according to the received SRS parameter.

In order to ensure SRS resources of different antennas in the mobile station to be orthogonal to each other, at least one of SRS parameters of each antenna shall be different from that of another antenna. For example, SRS resources of different antennas in the mobile station can be distinguished by different combinations of a frequency location, a TC value and a CS value. For example, one or more of the following combinations can be adopted: a different frequency location, a different TC value and the same or different CS value; a different frequency location, the same TC value and the same or different CS value; the same frequency location, a different TC value and the same or different CS value; or the same frequency location, the same TC value and a different CS value.

Various predetermined relationships between SRS parameters of antennas can be adopted as the predetermined relationship as long as SRS resources of the respective antennas are ensured to be orthogonal. An example of a relationship between SRS parameters of antennas will be described below taking a TC value and a CS value as an example for the purpose of a description. Typically, a value range of a TC value includes 0 and 1 representing an even- and odd-numbered sub-carrier of a carrier respectively. A CS value occupies 3 bits and a value range thereof includes 0 to 7.

A simple method is to take the same or different TC values for different antennas and to shift a CS value cyclically by a predetermined amount forward or backward sequentially in the value range. Several examples of a predetermined relationship will be given below.

A predetermined relationship depicted in Table 1.1-1 to Table 1.1-7 below applies to a 2-antenna mobile station. In each table, the first row (Comb_Index) represents a TC value, and the succeeding row (Cyclic_Shift_Index) represents CS values. The first column may represent a TC value and a CS value among SRS parameters for one antenna received from the base station, and the second column may represent a TC value and a CS value among SRS parameters for another antenna in the mobile station, and vice versa. In these tables, the TC values for SRS signals of the respective antennas are the same, for example, both are 0 or both are 1 (as indicated in the parentheses in Table). The CS values are shifted cyclically by n bits forward or backward sequentially in the value range, where n takes the values of 1 to 7. In Table 1.1-1, the CS value of the other antenna is shifted cyclically by 1 bit backward relative to the received CS value of the antenna; in Table 1.1-2, the CS value of the other antenna is shifted cyclically by 2 bit backward relative to the received CS value of the antenna; and so on.

For example, with the predetermined relationship as depicted in Table 1.1-4, if one antenna in the mobile station has a TC value of 0 and a CS value of 0 according to SRS parameters received from the base station, then it can be determined that the other antenna in the mobile station has a TC value of 0 and a CS value of 4 according to the predetermined relationship in Table 1.1-4. A repeated description of other cases will be omitted here.

Table 1.1-1

$[0(1)\ 0\ (1)] \rightarrow Comb\_Index$

$$\begin{bmatrix} 0 & 1 \\ 1 & 2 \\ 2 & 3 \\ 3 & 4 \\ 4 & 5 \\ 5 & 6 \\ 6 & 7 \\ 7 & 0 \end{bmatrix} \Bigg\} \rightarrow Cyclic\_Shift\_Index$$

Table 1.1-2

[0(1) 0 (1)] → Comb_Index

$$\begin{bmatrix} 0 & 2 \\ 1 & 3 \\ 2 & 4 \\ 3 & 5 \\ 4 & 6 \\ 5 & 7 \\ 6 & 0 \\ 7 & 1 \end{bmatrix} \Bigg\} \rightarrow Cyclic\_Shift\_Index$$

Table 1.1-3

[0(1) 0(1)] → Comb_Index

$$\begin{bmatrix} 0 & 3 \\ 1 & 4 \\ 2 & 5 \\ 3 & 6 \\ 4 & 7 \\ 5 & 0 \\ 6 & 1 \\ 7 & 2 \end{bmatrix} \Bigg\} \rightarrow Cyclic\_Shift\_Index$$

Table 1.1-3

Table 1.1-4

[0(1) 0 (1)] → Comb_Index

$$\begin{bmatrix} 0 & 4 \\ 1 & 5 \\ 2 & 6 \\ 3 & 7 \\ 4 & 0 \\ 5 & 1 \\ 6 & 2 \\ 7 & 3 \end{bmatrix} \Bigg\} \rightarrow Cyclic\_Shift\_Index$$

Table 1.1-5

$[0(1)\ 0(1)] \rightarrow Comb\_Index$

$$\begin{bmatrix} 0 & 5 \\ 1 & 6 \\ 2 & 7 \\ 3 & 0 \\ 4 & 1 \\ 5 & 2 \\ 6 & 3 \\ 7 & 4 \end{bmatrix} \Biggr\} \rightarrow Cyclic\_Shift\_Index$$

Table 1.1-6

$[0(1)\ 0(1)] \rightarrow Comb\_Index$

$$\begin{bmatrix} 0 & 6 \\ 1 & 7 \\ 2 & 0 \\ 3 & 1 \\ 4 & 2 \\ 5 & 3 \\ 6 & 4 \\ 7 & 5 \end{bmatrix} \Biggr\} \rightarrow Cyclic\_Shift\_Index$$

Table 1.1-7

$[0(1)\ 0\ (1)] \rightarrow Comb\_Index$

$$\begin{bmatrix} 0 & 7 \\ 1 & 0 \\ 2 & 1 \\ 3 & 2 \\ 4 & 3 \\ 5 & 4 \\ 6 & 5 \\ 7 & 6 \end{bmatrix} \Biggr\} \rightarrow Cyclic\_Shift\_Index$$

A predetermined relationship depicted in Table 1.2-1 to Table 1.2-8 below also applies to a 2-antenna mobile station. Unlike Table 1.1-1 to Table 1.1-7, the TC values for SRS signals of respective antennas are different in Table 1.2-1 to Table 1.2-8. Furthermore, CS values can be the same because SRS resources can be ensured to be orthogonal due to the different TC values, as depicted in Table 1.2-8.

For example, with the predetermined relationship as depicted in Table 1.2-2, if one antenna in the mobile station has a TC value of 0 and a CS value of 1 according to SRS parameters received from the base station, then it can be determined that the other antenna in the mobile station has a TC value of 1 and a CS value of 3 according to the predetermined relationship in Table 1.2-2. In another example, with the predetermined relationship as depicted in Table 1.2-2, if one antenna in the mobile station has a TC value of 1 and a CS value of 1 according to SRS parameters received from the base station, then it can be determined that the other antenna in the mobile station has a TC value of 0 and a CS value of 3 according to the predetermined relationship in Table 1.2-2. A repeated description of other cases will be omitted here.

Table 1.2-1

$[0(1)\ 1(0)] \rightarrow Comb\_Index$

$$\begin{bmatrix} 0 & 1 \\ 1 & 2 \\ 2 & 3 \\ 3 & 4 \\ 4 & 5 \\ 5 & 6 \\ 6 & 7 \\ 7 & 0 \end{bmatrix} \Bigg\} \rightarrow Cyclic\_Shift\_Index$$

Table 1.2-2

$[0(1)\ 1\ (0)] \rightarrow Comb\_Index$

$$\begin{bmatrix} 0 & 2 \\ 1 & 3 \\ 2 & 4 \\ 3 & 5 \\ 4 & 6 \\ 5 & 7 \\ 6 & 0 \\ 7 & 1 \end{bmatrix} \Bigg\} \rightarrow Cyclic\_Shift\_Index$$

Table 1.2-3

$[0(1)\ 1(0)] \rightarrow Comb\_Index$

$$\begin{bmatrix} 0 & 3 \\ 1 & 4 \\ 2 & 5 \\ 3 & 6 \\ 4 & 7 \\ 5 & 0 \\ 6 & 1 \\ 7 & 2 \end{bmatrix} \Bigg\} \rightarrow Cyclic\_Shift\_Index$$

Table 1.2-4

$[0(1)\ 1(0)] \rightarrow Comb\_Index$

$$\begin{bmatrix} 0 & 4 \\ 1 & 5 \\ 2 & 6 \\ 3 & 7 \\ 4 & 0 \\ 5 & 1 \\ 6 & 2 \\ 7 & 3 \end{bmatrix} \Bigg\} \rightarrow Cyclic\_Shift\_Index$$

Table 1.2-5

$[0(1)\ 1(0)] \rightarrow Comb\_Index$

$$\begin{bmatrix} 0 & 5 \\ 1 & 6 \\ 2 & 7 \\ 3 & 0 \\ 4 & 1 \\ 5 & 2 \\ 6 & 3 \\ 7 & 4 \end{bmatrix} \Bigg\} \rightarrow Cyclic\_Shift\_Index$$

Table 1.2-6

$[0(1)\ 1(0)] \rightarrow Comb\_Index$

$$\begin{bmatrix} 0 & 6 \\ 1 & 7 \\ 2 & 0 \\ 3 & 1 \\ 4 & 2 \\ 5 & 3 \\ 6 & 4 \\ 7 & 5 \end{bmatrix} \Bigg\} \rightarrow Cyclic\_Shift\_Index$$

Table 1.2-7

[0(1) 1(0)] → *Comb_index*

$$\begin{bmatrix} 0 & 7 \\ 1 & 0 \\ 2 & 1 \\ 3 & 2 \\ 4 & 3 \\ 5 & 4 \\ 6 & 5 \\ 7 & 6 \end{bmatrix} \Biggr\} \to Cyclic\_Shift\_Index$$

Table 1.2-8

[0(1) 1 (0)] → *Comb_Index*

$$\begin{bmatrix} 0 & 0 \\ 1 & 1 \\ 2 & 2 \\ 3 & 3 \\ 4 & 4 \\ 5 & 5 \\ 6 & 6 \\ 7 & 7 \end{bmatrix} \Biggr\} \to Cyclic\_Shift\_Index$$

A predetermined relationship depicted in Table 2.1-1 to Table 2.1-7 below applies to a 4-antenna mobile station. In each table, the first row (Comb_Index) represents a TC value, and the succeeding row (Cyclic_Shift_Index) represents CS values. The first column may represent a TC value and a CS value among SRS parameters for one antenna received from the base station, and the succeeding column may represent TC value and CS value among SRS parameters for second, third and fourth antennas in the mobile station, and vice versa. In these tables, the TC values for SRS signals of the respective antennas are the same, and the CS values are shifted cyclically by n bits forward or backward sequentially in the value range, where n takes the values of 1 to 2. The rows in Table 2.1-1 and Table 2.1-2 can be interchanged, that is, the succeeding columns can correspond to the second, third and fourth antennas or the third, second and fourth antennas, and so on.

For example, with the predetermined relationship as depicted in Table 2.1-2, if one antenna in the mobile station has a TC value of 0 and a CS value of 0 according to SRS parameters received from the base station, then it can be determined that the other three antennas in the mobile station have TC values of all 0 and CS values of 2, 4 and 6 respectively according to the predetermined relationship in Table 2.1-2. A repeated description of other cases will be omitted here.

Table 2.1-1

[0(1) 0(1) 0(1) *0(1)]→Comb_Ivδεξ*

$$\left[\begin{array}{cccc} 0 & 1 & 2 & 3 \\ 1 & 2 & 3 & 4 \\ 2 & 3 & 4 & 5 \\ 3 & 4 & 5 & 6 \\ 4 & 5 & 6 & 7 \\ 5 & 6 & 7 & 0 \\ 6 & 7 & 0 & 1 \\ 7 & 0 & 1 & 2 \end{array}\right] \Biggr\} \rightarrow Cyclic\_Shift\_Index$$

Table 2.1-2

[0(1) 0(1) 0(1) 0(1)]→ *Comb_Index*

$$\left[\begin{array}{cccc} 0 & 2 & 4 & 6 \\ 1 & 3 & 5 & 7 \\ 2 & 4 & 6 & 0 \\ 3 & 5 & 7 & 1 \\ 4 & 6 & 0 & 2 \\ 5 & 7 & 1 & 3 \\ 6 & 0 & 2 & 4 \\ 7 & 1 & 3 & 5 \end{array}\right] \Biggr\} \rightarrow Cyclic\_Shift\_Index$$

Predetermined relationship tables with different TC values of the four antennas can be derived from the foregoing Table 1.1 (Table 1.1-1 to Table 1.1-7) in combination with Table 1.2 (Table 1.2-1 to Table 1.2-8). For example, Table 2.2-1 can be derived from Table 1.2-8 in combination with Table 1.1-4, Table 2.2-2 can be derived from Table 1.2-2 in combination with Table 1.1-4, and Table 2.2-3 can be derived from Table 1.2-4 in combination with Table 1.1-2. Similar to the above case, columns of table 2.2-1, Table 2.2-2 and Table 2.2-3 can be interchanged.

A combination method will be introduced below taking derivation of Table 2.2-1 from Table 1.2-8 in combination with Table 1.1-4 as an example.

As can be apparent from observation of Table 1.2-8, these two sets of resources are configured with the same CS value and different TC values. As can be apparent from observation of Table 1.1-4, these two sets of resources are configured with a CS value shifted cyclically by 4 and the same TC value. In view of these regularities, a 4-antenna configuration table, e.g., Table 2.2-1, is derived from these two tables in combination, where the four antennas are divided into two groups each with the same TC value, for example, the first and third columns of Table 2.2-1 in one group and the second and fourth columns in one group. There is a CS value shifted cyclically by 4 in two columns of configuration in each group.

For example, with the predetermined relationship as depicted in Table 1.2-2, if one antenna in the mobile station has a TC value of 0 and a CS value of 1 according to SRS parameters received from the base station, then it can be determined that the other antenna in the mobile station has a TC value of 1 and a CS value of 3 according to the predetermined relationship in Table 1.2-2. A repeated description of other cases will be omitted here.

Table 2.2-1

[0(1) 1(0) 0(1) 1(0)] $\rightarrow$ *Comb_Index*

$$\begin{bmatrix} 0 & 0 & 4 & 4 \\ 1 & 1 & 5 & 5 \\ 2 & 2 & 6 & 6 \\ 3 & 3 & 7 & 7 \\ 4 & 4 & 0 & 0 \\ 5 & 5 & 1 & 1 \\ 6 & 6 & 2 & 2 \\ 7 & 7 & 3 & 3 \end{bmatrix} \rightarrow Cyclic\_Shift\_Index$$

Table 2.2-2

[0(1) 1(0) 0(1) 1(0)] $\rightarrow$ *Comb_Index*

$$\begin{bmatrix} 0 & 2 & 4 & 6 \\ 1 & 3 & 5 & 7 \\ 2 & 4 & 6 & 0 \\ 3 & 5 & 7 & 1 \\ 4 & 6 & 0 & 2 \\ 5 & 7 & 1 & 3 \\ 6 & 0 & 2 & 4 \\ 7 & 1 & 3 & 5 \end{bmatrix} \rightarrow Cyclic\_Shift\_Index$$

Table 2.2-3

[0(1) 0(1) 1(0) 1(0)] $\rightarrow$ *Comb_Index*

$$\begin{bmatrix} 0 & 2 & 4 & 6 \\ 1 & 3 & 5 & 7 \\ 2 & 4 & 6 & 0 \\ 3 & 5 & 7 & 1 \\ 4 & 6 & 0 & 2 \\ 5 & 7 & 1 & 3 \\ 6 & 0 & 2 & 4 \\ 7 & 1 & 3 & 5 \end{bmatrix} \rightarrow Cyclic\_Shift\_Index$$

It shall be appreciated that the foregoing predetermined relationship represented in a combination of a TC value and a CS value is merely illustrative. It shall be appreciated that the foregoing predetermined relationship can alternatively be a combination of a frequency location and a TC value, a combination of a frequency location and a CS value, a combination of a frequency location and a TC value and a CS value, etc., as long as SRS resources of respective antennas are ensured to be orthogonal.

In an embodiment of the invention, the predetermined relationship can be pre-stored in the mobile station, e.g.,

in a storage unit (not illustrated) in the mobile station in various forms, e.g., in a table, a database list, a multi-dimensional array, etc. Of course, a corresponding predetermined relationship shall also be pre-stored in the base station.

However, there is some restriction on a predetermined relationship being pre-stored in the mobile station. To unify the standard, each mobile station has to use the same predetermined relationship so that respective cells in the system also have to use the same predetermined relationship. Moreover, the predetermined relationship can not be updated flexibly in the system.

For more flexible use of a predetermined relationship, the predetermined relationship can be transmitted to the mobile station through the base station in an embodiment of the invention. For example, the base station can broadcast predetermined relationships corresponding to different numbers of antennas through downlink broadcast signaling, and the mobile station can receive the downlink broadcast signaling from the base station and obtain a predetermined relationship corresponding to the number of antennas of the mobile station itself therefrom.

Furthermore, the predetermined relationship is updated dynamically by the base station according to a change in channel conditions and wireless link properties in an embodiment of the invention. Thus, the predetermined relationship can adapt a specific situation of a present cell instead of the same predetermined relationship being used for each cell.

Further referring to Fig.4, the SRS resource allocating unit 320 allocates SRS resources to the other antennas according to the determined SRS parameters for the other antennas in the step S430.

The transmitting unit 330 transmits SRS signals of the respective antennas in the mobile station 300 respectively on the SRS resources allocated for the respective antennas via the respective antennas in the step S440 after allocating the SRS resources.

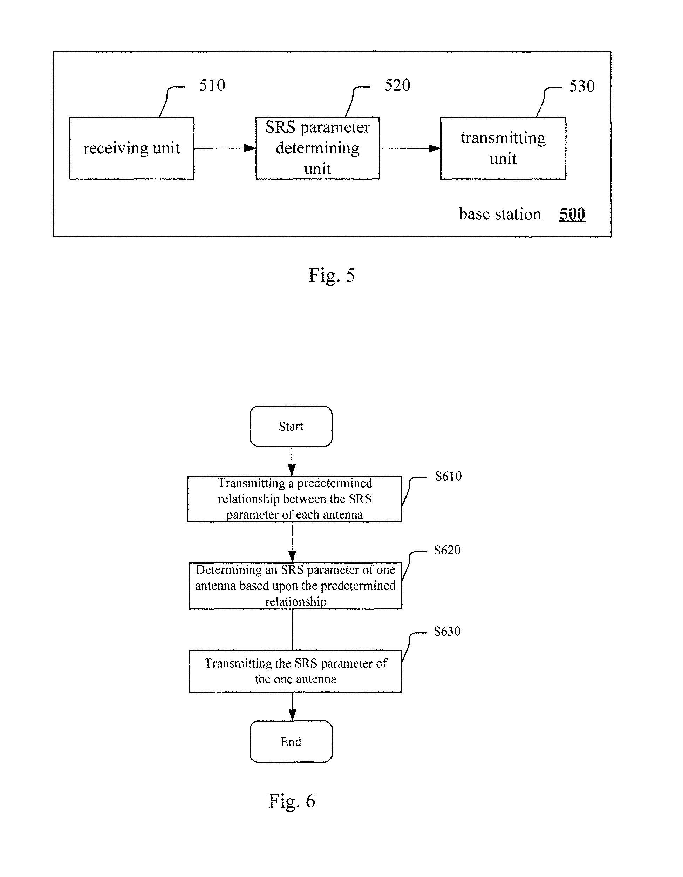

Fig.5 illustrates a block diagram of a base station according to an embodiment of the invention. The base station can be used cooperatively with the mobile station 300 according to the embodiment of the invention. The base station 500 includes: a receiving unit 510 configured to receive various data and signaling transmitted from a mobile station, e.g., an SRS signal transmitted from the mobile station, etc.; an SRS parameter determining unit 520 configured to determine an SRS parameter for an antenna in the mobile station; and a transmitting unit 530 configured to transmit various data and signaling to the mobile station, e.g., the SRS parameter of the antenna of the mobiles station, etc.

An operation principle of the base station 500 will be described below in details with reference to Fig.6. Fig.6 illustrates a flow chart of a method of transmitting an SRS parameter according to an embodiment of the invention.

In the step S610, the transmitting unit 530 transmits to a mobile station a predetermined relationship between the SRS parameter of each antenna of the mobile station. For a specific description of the predetermined relationship, reference can be made to the foregoing description of the mobile station with reference to Fig.4, and a repeated description thereof will be omitted here.

In the step S620, the SRS parameter determining unit 520 determines an SRS parameter for one antenna of the mobile station based on the predetermined relationship. Particularly, the SRS parameter determining unit 520 selects an appropriate SRS parameter according to the availability condition of system resources and a relationship between the SRS parameters of the respective antennas embodied in the predetermined relationship so that the mobile station allocates an available system resource for an SRS signal.

In the step S630, the transmitting unit 530 transmits to the mobile station the determined SRS parameter for one antenna of the mobile station.

The base station can measure a channel quality using the SRS signal transmitted from the mobile station upon reception of the SRS signal.

Furthermore, in an embodiment of the invention, the receiving unit 510 can receive the number of antennas of the mobile station from the mobile station prior to the step S610 so that the SRS parameter determining unit 520 determines the predetermined relationship corresponding to the number of antennas and further determines the SRS parameter for one antenna to be transmitted to the mobile station according to the number of antennas and based upon the determined predetermined relationship to thereby prevent an SRS resource of the mobile station from conflicting with an SRS resource assigned by a system to another mobile station.

As described above, the transmitting unit 530 can broadcast the predetermined relationship by downlink broadcast signaling. Furthermore, in an embodiment of the invention, the predetermined relationship broadcasted from the transmitting unit 530 can include predetermined relationships corresponding to various numbers of antennas so that the mobile station in a cell can obtain therefrom a predetermined relationship corresponding to its own number of antennas.

Furthermore, as described above, the SRS parameter determining unit 520 can update the predetermined relationship dynamically according to a change in channel conditions and wireless link properties so as to make the predetermined relationship be used more flexibly.

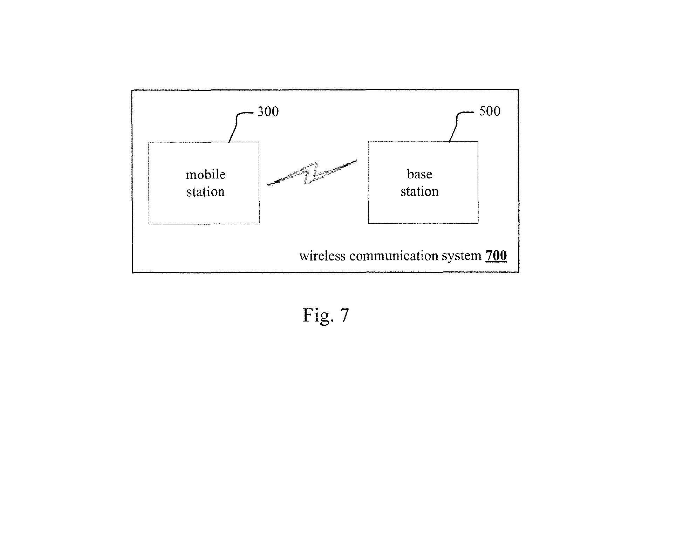

Fig.7 illustrates a block diagram of a wireless communication system according to an embodiment of the invention. The wireless communication system 700 includes the foregoing mobile station 300 and base station 500. The mobile station 300 and the base station 500 as well as communication therebetween will not be described in details here for conciseness of the description.

Different antennas of the mobile station can be distinguished by a predetermined relationship between SRS parameters of antennas in the foregoing embodiments of the invention. Different mobile stations can also be distinguished by such a predetermined relationship. Thus, the base station only needs to transmit an SRS parameter of one antenna to the mobile station thereby saving signaling resources of the system.

Furthermore, the base station transmits such a predetermined relationship to the mobile station, and the base station can update the predetermined relationship dynamically according to a network condition to thereby enhance the flexibility of the system.

Furthermore, the base station can broadcast the predetermined relationship in downlink broadcast signaling, and the mobile station obtains therefrom a predetermined relationship corresponding to its own number of antennas to thereby save signaling resources of the system.

The embodiments of the invention have been introduced above taking an LTE-A system as an example. However, embodiments of the invention will not be limited thereto. Those skilled in the art can readily conceive upon review of the foregoing disclosure that the invention can also be embodied in other communication systems such as Wimax with required transmission of a similar sounding reference signal.

Those ordinarily skilled in the art can appreciate that all or any of the steps or the components of the inventive methods and apparatuses can be embodied in any computing device (including a processor, a storage medium, etc.) or network of computing devices in hardware, firmware, software or combination thereof, and this can be realized by those ordinarily skilled in the art upon review of the description of the invention in conjunction with their general programming skills, so a detailed description thereof will be omitted here.

Thus, based upon the foregoing understanding, the object of the invention can also be attained by running a program or a set of programs on any information processing device which can be a well-known general-purpose device. Thus, the object of the invention can also be attained by providing only a program product containing program codes to embody the methods or the apparatuses. In other words, such a program product also constitutes the invention, and a storage medium in which such a program product is stored also constitutes the invention. Apparently, the storage medium can be any well-known storage medium or any storage medium to be developed in the future, so it is not necessary to enumerate various storage mediums here.

In the methods and apparatuses of the invention, the respective components or the respective steps apparently can be decomposed, combined and/or decomposed and then recombined. These decomposition, combination and/or recombination shall be regarded as equivalents of the invention.

It shall be noted that the term "include/comprise" as used in this context refers to presence of a feature, element, a step or a component but will not preclude presence or addition of one or more other features, elements, steps or components.

Furthermore, the methods according to the invention shall not be limited to being performed only in the chronological sequence described in the specification but can also be performed in another chronological sequence, concurrently or separately. Therefore, the technical scope of the invention can not be limited by the sequence in which the methods are performed as described in the specification.

Although the invention has been disclosed above in the description of the embodiments thereof, it shall be appreciated that all the embodiments and examples described above are illustrative but not limiting. Those skilled in the art can devise various modifications, improvements or equivalents to the invention within the spirit and scope of the appended claims. These modifications, improvements or equivalents shall also be regarded as included in the scope of the invention.

**Claims**

1. A method for Sounding Reference Signal (SRS) transmission, comprising:

    allocating SRS resources to one antenna of a mobile station according to an SRS parameter for one antenna received from a base station;
    determining SRS parameters for other antennas of the mobile station according to the received SRS parameter and based on a predetermined relationship between the SRS parameter of each antenna of the mobile station;
    allocating SRS resources to the other antennas according to the determined SRS parameters for the other antennas; and
    transmitting respective SRS signals on the allocated SRS resources respectively via the one and the other antennas.

2. The method of claim 1, further comprising:

    receiving a downlink broadcast signaling from the base station, and obtaining the predetermined relationship corresponding to the total number of the antennas of the mobile station from the downlink broadcast signaling.

3. The method of claim 1, wherein the predetermined relationship is updated dynamically by the base station according to a change in channel conditions and wireless link properties.

4. A method for Sounding Reference Signal (SRS) parameter transmission, comprising:

transmitting to a mobile station a predetermined relationship between the SRS parameter of each antenna of the mobile station;
determining an SRS parameter for one antenna of the mobile station based on the predetermined relationship; and
transmitting to the mobile station the SRS parameter for the one antenna of the mobile station.

5. The method of claim 4, wherein the predetermined relationship corresponding to the total number of the antennas of the mobile station is transmitted via a downlink broadcast signaling.

6. The method of claim 4, further comprising:

updating the predetermined relationship dynamically according to a change in channel conditions and wireless link properties.

7. The method of claim 5, further comprising:

receiving the total number of the antennas of the mobile station;
determining the predetermined relationship corresponding to the total number of the antennas; and
determining the SRS parameter for one antenna of the mobile station to be transmitted to the mobile station according to the total number of the antennas and based on the predetermined relationship.

8. A mobile station, comprising:

a receiving unit, for receiving a Sounding Reference Signal (SRS) parameter for one antenna from a base station;
an SRS resource allocation unit, for
allocating SRS resources to one antenna of the mobile station according to the SRS parameter received by the received unit;
determining SRS parameters for other antennas of the mobile station according to the received SRS parameter and based on a predetermined relationship between the SRS parameter of each antenna of the mobile station; and
allocating SRS resources to the other antennas of the mobile station according to the determined SRS parameters for the other antennas; and
a transmitting unit, for transmitting respective SRS signals on the allocated SRS resources respectively via the one and the other antennas.

9. The mobile station of claim 8, wherein the receiving unit is further adapted for receiving a downlink broadcast signaling from the base station and obtaining the predetermined relationship corresponding to the total number of the antennas of the mobile station from the downlink broadcast signaling.

10. The mobile station of claim 8, wherein predetermined relationship is updated dynamically by the base station according to a change in channel conditions and wireless link properties.

11. A base station, comprising:

a Sounding Reference Signal (SRS) parameter determining unit, for determining an SRS parameter for one antenna of a mobile station based on a predetermined relationship between the SRS parameter of each antenna of the mobile station; and
a transmitting unit, for transmitting the predetermined relationship to the mobile station and transmitting the SRS parameter for one antenna to the mobile station.

12. The base station of claim 11, wherein the transmitting unit transmits the predetermined relationship corresponding to the total number of the antennas of the mobile station via a downlink broadcast signaling.

13. The base station of claim 11, wherein the SRS parameter determining unit is further adapted for updating the predetermined relationship dynamically according to a change in channel conditions and wireless link properties.

14. The base station of claim 12, further comprising a receiving unit which is adapted for receiving the total number of the antennas of the mobile station, and
wherein the SRS parameter determining unit is further adapted for determining the predetermined relationship corresponding to the total number of the antennas and determining the SRS parameter for one antenna of the mobile station to be sent to the mobile station according to the total number of the antennas and based on the predetermined relationship.

Fig. 1

Fig. 2

```
                                          310                    320                    330
        ┌─────────────────┐      ┌──────────────────┐      ┌──────────────────┐
        │                 │      │                  │      │                  │
        │  receiving unit │ ───▶ │  SRS resource    │ ───▶ │  transmitting    │
        │                 │      │  allocating unit │      │  unit            │
        └─────────────────┘      └──────────────────┘      └──────────────────┘

                                                        mobile station   300
```

Fig. 3

```
                        ┌────────────┐
                        │   Start    │
                        └────────────┘
                              │
                              ▼
             ┌──────────────────────────────┐        S410
             │  Allocating an SRS resource for │
             │  one antenna                   │
             └──────────────────────────────┘
                              │
                              ▼
             ┌──────────────────────────────┐        S420
             │  Determining SRS parameters of │
             │  other antennas                │
             └──────────────────────────────┘
                              │
                              ▼
             ┌──────────────────────────────┐        S430
             │  Allocating SRS resources for the │
             │  other antennas                │
             └──────────────────────────────┘
                              │
                              ▼
             ┌──────────────────────────────┐        S440
             │  Transmitting SRS signals on the │
             │  allocated SRS resources       │
             └──────────────────────────────┘
                              │
                              ▼
                        ┌────────────┐
                        │    End     │
                        └────────────┘
```

Fig. 4

510

520

530

receiving unit → SRS parameter determining unit → transmitting unit

base station **500**

Fig. 5

Start

↓

Transmitting a predetermined relationship between the SRS parameter of each antenna — S610

↓

Determining an SRS parameter of one antenna based upon the predetermined relationship — S620

Transmitting the SRS parameter of the one antenna — S630

↓

End

Fig. 6

300

500

mobile
station

base
station

wireless communication system **700**

Fig. 7

# INTERNATIONAL SEARCH REPORT

| International application No. |
| --- |
| PCT/CN2010/072320 |

**A. CLASSIFICATION OF SUBJECT MATTER**

H04W 72/04（2009.01）i

According to International Patent Classification (IPC) or to both national classification and IPC

**B. FIELDS SEARCHED**

Minimum documentation searched (classification system followed by classification symbols)

IPC: H04W, H04Q, H04L

Documentation searched other than minimum documentation to the extent that such documents are included in the fields searched

Electronic data base consulted during the international search (name of data base and, where practicable, search terms used)

CPRSABS, CNKI, WPI, EPODOC: sounding reference signal, SRS, antenna, aerial, resource, parameter

**C. DOCUMENTS CONSIDERED TO BE RELEVANT**

| Category* | Citation of document, with indication, where appropriate, of the relevant passages | Relevant to claim No. |
| --- | --- | --- |
| X | CN101610607A (DATANG MOBILE COMMUNICATION EQUIP CO LTD) 23 Dec. 2009(23.12.2009), the description page 10 line 2 to page13 line 20, figures 5a-8 | 1-14 |
| X | CN101540631A (ZTE COMMUNICATION CO LTD) 23 Sept. 2009(23.09.2009), the description pages 13-20, figures 7-13 | 1-14 |
| A | CN101594633A (ZTE COMMUNICATION CO LTD) 02 Dec. 2009(02.12.2009), the whole document | 1-14 |

☐ Further documents are listed in the continuation of Box C.　　☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
| --- | --- |
| 21 Jan. 2011(21.01.2011) | **17 Feb. 2011 (17.02.2011)** |
| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer ZHANG, Jiangbo Telephone No. (86-10)62411480 |

Form PCT/ISA /210 (second sheet) (July 2009)

**INTERNATIONAL SEARCH REPORT**
Information on patent family members

| International application No. |
|---|
| PCT/CN2010/072320 |

| Patent Documents referred in the Report | Publication Date | Patent Family | Publication Date |
|---|---|---|---|
| CN101610607A | 23.12.2009 | WO2009152696A1 | 23.12.2009 |
| CN101540631A | 23.09.2009 | WO2010124588A1 | 04.11.2010 |
| CN101594633A | 02.12.2009 | WO2010145470A1 | 23.12.2010 |

Form PCT/ISA/210 (patent family annex) (July 2009)